# EUROPÄISCHE PATENTSCHRIFT

(11) **EP 2 057 477 B1**
(45) Veröffentlichungstag und Bekanntmachung des Hinweises auf die Patenterteilung: **12.06.2013**
(21) Anmeldenummer: 07786479.1
(22) Anmeldetag: 01.08.2007
(51) Int. Cl.: G01S 19/21, G01S 19/18, G01S 19/01

(54) **VERFAHREN UND VORRICHTUNG ZUR SELEKTIVEN STÖRUNG VON EMPFÄNGERN, INSBESONDERE VON SYSTEMEN ZUR SATELLITENGESTÜTZTEN POSITIONSBESTIMMUNG**
METHOD AND DEVICE FOR THE SELECTIVE INTERFERENCE OF RECEIVERS, IN PARTICULAR OF SYSTEMS FOR SATELLITE-BASED POSITION DETERMINATION
PROCÉDÉ ET DISPOSITIF POUR LE BROUILLAGE SÉLECTIF DE RÉCEPTEURS, EN PARTICULIER DE SYSTÈMES DE DÉTERMINATION DE POSITION ASSISTÉS PAR SATELLITE

(30) Priorität: 28.08.2006 DE 102006040102
(43) Veröffentlichungstag der Anmeldung: 13.05.2009
(73) Patentinhaber: Rheinmetall Waffe Munition GmbH, 29345 Unterlüss (DE); Plath GmbH, 20094 Hamburg (DE)
(72) Erfinder: BANNASCH, Heinz, 83741 Schönau am Königssee (DE); WALLNER, Christian, 83457 Bayerisch Gmain (DE); MAUSBACH, Klaus, 22869 Schenefeld (DE); DEECKE, Lothar, 23556 Lübeck (DE); SCHATZ, Viktor, 22844 Norderstedt (DE)
(74) Vertreter: Dietrich, Barbara
(86) Internationale Anmeldenummer: PCT/EP2007/006787
(87) Internationale Veröffentlichungsnummer: WO 2008/025427

(56) Entgegenhaltungen:
- DE-A1- 10 318 475
- DE-B4- 19 882 633
- US-A- 5 822 429
- US-A1- 2004 239 559

## Beschreibung

Die Aufgabe eines GPS- Jammers besteht darin, alle im Umkreis seines Wirkungsbereichs befindlichen GPS- Empfänger zu stören. Dies funktioniert in der Regel dadurch, dass eine Quelle (Jammer) in dem Frequenzbereich, in dem die Nutzsignale des GPS (Global Positioning Systems) ein Störsignal, beispielsweise ein Rauschsignal ohne Informationsgehalt, ausreichender Stärke erzeugen und abstrahlen, um so das Nutzsignal zu überdecken und zu verhindern, dass diese Nutzsignale von den GPS- Empfängern genutzt werden können.

Ein digitales Störungs- Unterdrückungssystem für eine hochfrequente Störsignal- Beseitigung wird in der DE 198 82 633 B4 beschrieben. Mit Hilfe dieses Systems können alle Arten von Stör- und / oder Jamming- Signalen ausgeblendet werden, die ein globaler Positioniersystem- oder Breitspektrum- Empfänger von verschiedenen Antennen aufnimmt. In der vorgeschlagenen Anordnung werden orthogonale Komponenten des zusammengesetzten Empfangssignals durch die Empfangsantennenanordnung separiert und in dem digitalen Netzwerk zwischen der Antenne und dem Empfänger in Phase und Amplitude so eingestellt, dass Komponenten optimal ausgelöscht werden. Die orthogonalen Empfangssignalkomponenten aus der GPS- Satellitenkonstellation und von Interferenzquellen werden so kombiniert, dass adaptiv eine Null geschaffen wird, die die Interferenzquelle ausschaltet, während die GPS-Empfangssignale leicht modifiziert werden.

Aus der DE 103 18 475 A1 ist ein Verfahren zur störungsfreien Kommunikation beim Betrieb eines Störers bekannt. Das Verfahren ist dabei im Bereich der nicht letalen Zerstörung von Zielen angesiedelt. Bekanntlich werden in diesem Bereich neben Hochleistungsmikrowellen-Quellen (HPM = high-power-microwave) auch explosivstoffgetriebene RF- Generatoren (RF = radio frequency) verwendet, um durch zielgerichtetes Senden von RF- Strahlen die Elektronik eines Ziels zu zerstören oder die Funktion durch Blenden oder Stören zu beeinträchtigt, ohne das Ziel dabei selbst zu zerstören. Da beim Betrieb des Störsenders auch die eigenen Kornmunikationssysteme gestört werden, sofern diese sich innerhalb der Reichweite des Störers und des vom Störer abgedeckten Frequenzbereiches befinden, wird hier vorgeschlagen, dass die Sender der miteinander kommunizierenden Teilnehmer untereinander ein so genanntes Zeitfenster im Störmuster verwenden, in welchem sie miteinander kommunizieren können. Dieses Fenster kann entweder für die Sender automatisch vorgegeben oder durch ein Signal etc. mitgeteilt werden.

Die US 2004/239559 A1 betrifft ein Verfahren zur drahtlosen Kommunikation. GPS- basierte Positionsbestimmungen ermöglichen Standort basierte Anwendungen und Dienste in Mobiltelefonen und anderen Kommunikationsmitteln. Die damit verbundene relative Nahe der GPS- Empfänger und Antenne an den zellularen Sendeempfänger und Antenne in immer kleiner werdenden Mobilteilen bewirken Interferenzen. Des Weiteren kann der GPS- Empfänger während des Sendens gestört werden. Zur Reduzierung des Störsignals wird vorgeschlagen, dass ein derartiges Störsignal mit einer Störcharakteristik erfasst sowie ein Austastsignal erzeugt wird. Dieses Austastsignal überlappt zumindest teilweise das Störsignal. Eine Reduzierung des Störsignals wird dann dadurch erreicht, dass der GPS- Empfänger aus dem System genommen wird. Die Kompensierung des Empfindlichkeitsverlustes während der Austastung des GPS-Empfängers erfolgt dadurch, dass eine Integrationszeit, welche der Verarbeitung empfangener Satellitensignale zugehörig ist, erhöht wird.

Die US 5,8522,429 A1 betrifft ein GPS- System, das ein Vorhandensein für unerlaubte - unbefugte - Nutzer leugnet und nur autorisierten Nutzem das Vorhandensein des GPS ermöglicht. Eine Empfangseinheit dieser autorisierten Nutzer erkennt, synchronisiert und decodiert die Störwellenformmodulation oder Wechselrate und unterdrückt das Störsignal, das für das Leugnen verantwortlich ist, mit Polarisations- Entstörungstechnlken. Das Verschlüsselungsmuster der Modulation (Wollenform) umfasst eine Tageskodierung, Ortslokalisation und eine Zeit-Kodierung. Die anderen Nutzer können das so verschlüsselte (modulierte) Signal des GPS nicht erkennen oder gar synchronisieren. Sie erhalten nur ein Störsignal, das auf ein Nichtvorhandensein des GPS hinweist. Das Störsignal wird andauernd gesendet.

Hier greift die Erfindung die Aufgabe auf, einen bzw. mehrere Jammer zu schatfen, welcher während seiner Funktion nur einzelne oder In Gruppen zusammengefasste, insbesondere GPS- Empfänger stört, andere hingegen nicht.

Der Erfindung liegt neben dieser Aufgabe die Idee zugrunde, ein Verfahren und ein damit arbeitendes Gerät anzubieten, welche ein selektives Stören von herkömmlichen (professionellen) insbesondere GPS- Empfängern ermöglichen. In Lösung werden die Empfänger, die nicht gestört werden sollen, mit Mitteln ausgerüstet, die sie vor den Signalen schützen bzw. mit Mitteln versehen, die es den Empfängern ermöglichen, in bestimmten Zeitintervallen arbeiten zu können. In Funktion der Empfänger werden dann nur noch die Empfänger gestört, die kein entsprechendes vorgeschaltetes Mittel ausweisen, sodass diese dann keine Ortsinformationen mehr anzeigen können.

Das vorgeschaltete Mittel kann in einer bevorzugten, da einfachen Ausführung, ein Vorschaltgerät sein, welches zwischen der Antenne des Empfängers und dem eigentlichen Empfänger geschaltet wird. Dieser Einbindungsort bietet sich besonders an, da viele Empfänger vielfach Eingänge für externe Zusatzantennen etc. aufweisen. Dieser so vor einem Jammer geschützte Empfänger kennt dabei den aktuellen Standort, während dem durch einen Jammer gestörten Empfänger die aktuelle Information fehlt. Bekanntlich zeigt ein GPS-Empfänger bei fehlendem Antennensignal die vorherige Position an. Diese Eigenschaft besitzt ein GPS- Empfänger, um fehlende Signale überbrücken zu können, wenn der Empfänger sich beispielsweise in einem bewaldeten Gebiet oder Schluchten oder dergleichen befindet (bewegt).

Das nunmehr sich schützbare System nutzt dabei in Weiterführung der Erfindung eine weitere Eigenschaft, nämlich, dass der Jammer nunmehr nicht permanent ein Störsignal abstrahlt, sondern nach bzw. innerhalb einer definierten Zeit. Dabei werden Zeitintervalle angestrebt, in denen der Störsender (Jammer) das Störsignal ausgestrahlt oder die Aussendung des Störsignals unterbricht. Bevorzugt wird in einem längeren Zeitintervall ein Störsignal ausgestrahlt und dann für ein kürzeres Zeitintervall wieder ausgeschaltet. Das vorgeschaltete Mittel seinerseits kennt diese vorgegebenen Zeitintervalle und leitet zeit- und zielgerichtet nur in den ungestörten Zeitintervallen die Antennensignale zum Empfänger durch. Während der Störintervalle hingegen werden keine Signale zum Empfänger geleitet. Ein Empfänger, der diese Zeitintervalle nicht kennt, wird zwar nur während eines großen Teils der Zeit einem Störsignal ausgesetzt, die kurzen Zeitintervalle ohne Störung reichen dabei jedoch nicht aus, um eine korrekte Position zu berechnen.

Bevorzugt ist dabei vorgesehen, dass der Empfänger mit dem vorgeschalteten Mittel neben den kürzeren Intervallen, während der er das ungestörte Signal empfängt und darauf seine Berechnungen durchführt, dann überhaupt kein Signal zugeführt bekommt, wenn das Störsignal ausgesendet wird. Hingegen unterliegt der Empfänger ohne Vorschaltung dem störenden Signal, während die kurzen Zeitintervalle keine verwertbare Information liefern und damit für diese Empfänger keine Positionsberechnung möglich ist.

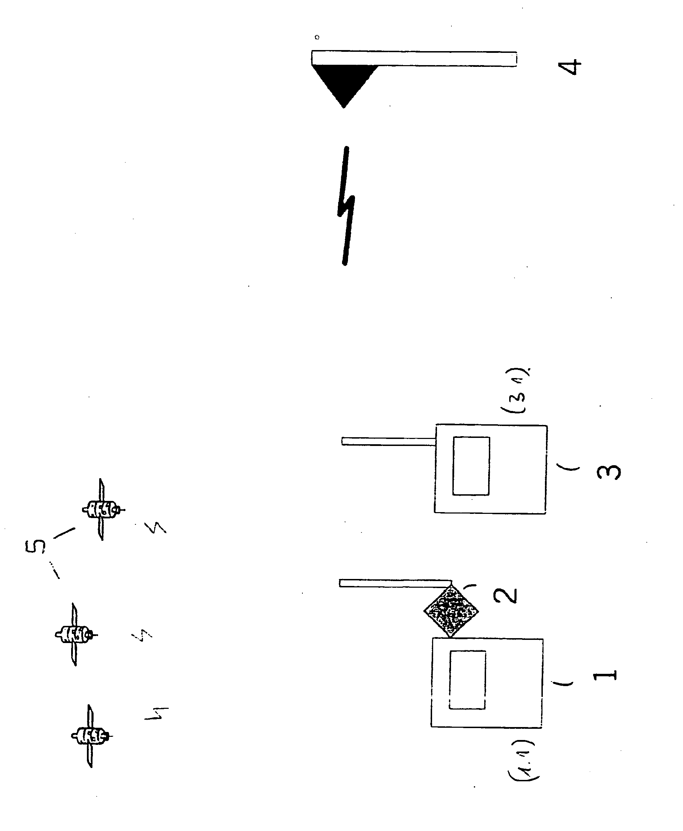

Anhand eines Ausführungsbeispiels mit Zeichnung soll die Erfindung näher erläutert werden. Es zeigt die einzige Figur eine schematische Darstellung eines Systems 10, bestehend aus einem ersten hier GPS- Empfänger 1 bzw. Gruppe 1.1 sowie einem zweiten gleichfalls GPS-Empfänger 3 oder eine zweite Gruppe 3. 1, wenigstens einem Störer 4, einem so genannten Jammer bzw. GPS- Jammer und vorzugsweise mehreren hier GPS- Sendern 5, beispielsweise Satteliten. Während der erste Empfänger 1 bzw. die erste Gruppe 1.1 mit einem Mittel 2 versehen ist, besitzt der zweite Empfänger 3 bzw. die zweite Gruppe 3.1 kein entsprechendes Mittel.

Bevorzugt ist der Jammer 4 durch eine Werferanlage (nicht näher dargestellt) verschiessbar. Dazu weist der Jammer 4 beispielsweise einen Fallschirm auf (nicht näher dargestellt), der wenige Sekunden nach dem Verschuss geöffnet wird. Mit Öffnen des Fallschirmes ist dann vorgesehen, dass der Jammer 4 zugeschaltet wird und während der Flugphase (ca. 1 min) wirkt. Alternativ kann die Zuschaltung direkt mit oder unmittelbar nach dem Verschuss erfolgen. Die Reichweite kann dabei beispielsweise bei 5 km liegen.

Der Jammer 4 ist dem (den) Vorschaltgeräten 2 derartig abgestimmt, dass beide gleiche Zeitintervalle Δt₁, Δt₂ etc. kennen bzw. erkennen. Dabei wird eine symmetrische aber in den Zeitintervallen differenzierende Ausstrahlung des Jammers 4 bevorzugt. So bilden beispielsweise die ungeraden Zeitintervalle Δt₁, Δt₃, Δt₅ die längeren Zeitintervalle und die geraden Δt₂, Δt₄, Δt₆ etc. die kürzeren. Innerhalb dieser Vorgaben kann die Zeit jedoch variiert werden. Vom Jammer 4 wird genau in den Zeitintervallen oder Zeiträumen Δt₁, Δt₃, Δt₅ etc. ein Störsignal 6 ausgesendet, während der das Vorschaltgerät 2 keine Signale an den GPS- Empfänger 1 (1.1) weiterleitet. Der GPS- Empfänger 1 (1.1) verhält sich in dieser Zeit wie bei einer normalen Empfangsunterbrechung und zeigt den jeweils zuletzt berechneten Wert an, der GPS- Empfänger 3 (3.1) bekommt hingegen ein massives Störsignal 6 zugeführt, dass Berechnungen praktisch unmöglich macht.

Bevorzugt wird ein Störsignal in den relevanten Frequenzen 1223 MHz bzw. 1557 MHz ausgesendet.

In Δt₁ wird also der Jammer 4 eingeschaltet, das Vorschaltgerät 2 entsprechend ausgeschaltet oder als Block geschaltet und liefert keine Signale an den GPS- Empfänger 1 (1.1). In Δt₂ wird der Jammer 4 ausgeschaltet, das Vorschaltgerät 2 beispielsweise wieder zugeschaltet und leitet die Signale an den GPS- Empfänger 1 (1.1) durch. In Δt₃ läuft das ganze wie bei Δt₁ und in Δt₄ wie bei Δt₂ etc.

Es versteht sich, dass insbesondere die mit GPS bezeichneten Baugruppen neben dem Global Positioning Systems auch das russische GLONASS und als auch zukünftige Systeme dieser Art, wie beispielsweise das europäische Galileo- System, einschließen bzw. diese mit umfassen.

## Patentansprüche

1. Verfahren zur Störung von wenigstens einem insbesondere professionellen GPS-Empfänger (1, 1.1, 3, 3.1) mit wenigstens einem Störer (4), **dadurch gekennzeichnet, dass** wenigstens ein Empfänger (1, 1.1) mit einem vorgeschalteten Mittel (2) versehen ist, welches in bestimmten Zeitintervallen (Δt₁, Δt₃, Δt₅) kein Signal und in den anderen Zeit-intervallen (Δt₂, Δt₄, Δt₆) ein Signal an den mit dem Mittel (2) versehenen Empfänger (1, 1.1) weiterleitet, wobei in einem längeren Zeitintervall ein Störsignal ausgestrahlt und dann für ein kürzeres Zeitintervall wieder ausgeschaltet wird, sodass ein Empfänger (3, 3.1), der diese Zeitintervalle nicht kennt, während eines großen Teils der Zeit einem Störsignal (6) ausgesetzt wird und die kurzen Zeitintervalle (Δt₂, Δt₄, Δt₆) ohne Störung nicht ausreichen, um eine korrekte Position zu berechnen.

2. Verfahren nach Anspruch 1, **dadurch gekennzeichnet, dass** das Störsignal (6) in den relevanten Frequenzen 1223 MHz bis 1557 MHz ausgesendet wird.

3. Verfahren nach Anspruch 1 oder 2, **dadurch gekennzeichnet, dass** der Störer (4) durch eine Werferanlage verschießbar ist.

4. Vorrichtung zur Störung von wenigstens einem insbesondere professionellen GPS-Empfänger (1, 1.1, 3, 3.1), wenigstens einem Sender (5) und mit wenigstens einem Störer (4), **dadurch gekennzeichnet, dass** wenigstens ein Empfänger (1, 1.1) mit einem vorgeschalteten Mittel (2) versehen ist, welches in bestimmten intervallen (Δt₁, Δt₃, Δt₅) kein Signal und in den anderen Zeitintervallen (Δt₂, Δt₄, Δt₆) ein Signal an den mit dem Mittel (2) versehenen Empfänger (1, 1.1) weiterleitet, wobei in einem längeren Zeitintervall ein Störsignal ausgestrahlt und dann für ein kürzeres Zeitintervall wieder ausgeschaltet wird, sodass ein Empfänger (3, 3.1), der diese Zeitintervalle nicht kennt, während eines großen Teils der Zeit einem Störsignal (6) ausgesetzt wird und die kurzen Zeitintervalle (Δt₂, Δt₄, Δt₆) ohne Störung nicht ausreichen, um eine korrekte Position zu berechnen.

5. Vorrichtung nach Anspruch 4, **dadurch gekennzeichnet, dass** der Störer (4) durch eine Werferanlage verschiessbar ist.

6. Vorrichtung nach Anspruch 5, **dadurch gekennzeichnet, dass** der Störer (4) einen Fallschirm aufweist, der wenige Sekunden nach dem Verschuss geöffnet wird.

7. Vorrichtung nach Anspruch 6, **dadurch gekennzeichnet, dass** mit Öffnen des Fallschirmes der Störer (4) zugeschaltet wird und während der Flugphase (ca. 1 min) wirkt.

8. Vorrichtung nach Anspruch 6, **dadurch gekennzeichnet, dass** die Zuschaltung direkt mit oder unmittelbar nach dem Verschuss erfolgen kann.

9. Vorrichtung nach einem der Ansprüche 5 bis 8, **dadurch gekennzeichnet, dass** die Reichweite beispielsweise bei 5 km liegen kann.

## Claims

1. Method for jamming at least one, in particular professional, GPS receiver (1, 1.1, 3, 3.1) using at least one interference source (4), **characterized in that** at least one receiver (1, 1.1) is provided with an upstream means (2) which, in particular time intervals (Δt₁, Δt₃, Δt₅), does not forward a signal and in the other time intervals (Δt₂, Δt₄, Δt₆) forwards a signal to the receiver (1, 1.1) provided with the means (2), wherein an interference signal is emitted in a relatively long time interval and then is switched off again for a relatively short time interval, with the result that a receiver (3, 3.1) which does not know these time intervals is exposed to an interference signal (6) for a large portion of the time and the shorter time intervals (Δt₂, Δt₄, Δt₆) without interference are not sufficient to calculate a correct position.

2. Method according to Claim 1, **characterized in that** the interference signal (6) is emitted in the relevant frequencies 1223 MHz to 1557 MHz.

3. Method according to Claim 1 or 2, **characterized in that** the interference source (4) can be fired by a launcher installation.

4. Apparatus for jamming at least one, in particular professional, GPS receiver (1, 1.1, 3, 3.1), having at least one transmitter (5) and having at least one interference source (4), **characterized in that** at least one receiver (1, 1.1) is provided with an upstream means (2) which, in particular time intervals (Δt₁, Δt₃, Δt₅), does not forward a signal and in the other time intervals (Δt₂, Δt₄, Δt₆) forwards a signal to the receiver (1, 1.1) provided with the means (2), wherein an interference signal is emitted in a relatively long time interval and then is switched off again for a relatively short time interval, with the result that a receiver (3, 3.1) which does not know these time intervals is exposed to an interference signal (6) for a large portion of the time and the short time intervals (Δt₂, Δt₄, Δt₆) without interference are not sufficient to calculate a correct position.

5. Apparatus according to Claim 4, **characterized in that** the interference source (4) can be fired by a launcher installation.

6. Apparatus according to Claim 5, **characterized in that** the interference source (4) has a parachute which is opened a few seconds after firing.

7. Apparatus according to Claim 6, **characterized in that** opening of the parachute prompts the interference source (4) to be switched on and to act during the flight phase (approximately 1 min).

8. Apparatus according to Claim 6, **characterized in that** switch-on can take place directly upon or directly after firing.

9. Apparatus according to one of Claims 5 to 8, **characterized in that** the range may be 5 km, for example.

## Revendications

1. Procédé de parasitage d'au moins un récepteur GPS (1, 1.1, 3, 3.1), en particulier d'un récepteur GPS professionnel, à l'aide d'au moins un parasiteur (4), **caractérisé en ce que**
un moyen (2) raccordé en amont d'au moins un récepteur (1, 1.1) n'envoie pas de signal au récepteur (1, 1.1) doté du moyen (2) pendant des intervalles de temps (Δt₁, Δt₃, Δt₅) définis et lui transmet un signal pendant d'autres intervalles de temps (Δt₂, Δt₄, Δt₆),
**en ce qu'**un signal parasite est émis pendant un intervalle de temps assez long et est ensuite interrompu pendant un intervalle de temps plus court de telle sorte qu'un récepteur (3, 3.1) qui ne connaît pas ces intervalles de temps soit exposé à un signal parasite (6) pendant une grande partie du temps et que les courts intervalles de temps (Δt₂, Δt₄, Δt₆) sans parasites ne suffisent pas à calculer une position correcte.

2. Procédé selon la revendication 1, **caractérisé en ce que** le signal parasite (6) est émis dans les fréquences pertinentes de 1223 MHz à 1557 MHz.

3. Procédé selon les revendications 1 ou 2, **caractérisé en ce que** le parasiteur (4) peut être tiré par une installation de projection.

4. Dispositif de parasitage d'au moins un récepteur GPS (1, 1.1, 3, 3.1), notamment d'un récepteur GPS professionnel, et présentant au moins un émetteur (5) et au moins un parasiteur (4), **caractérisé en ce que**
le dispositif présente un moyen (2) raccordé en amont d'au moins un récepteur (1, 1.1) n'envoie pas de signal au récepteur (1, 1.1) doté du moyen (2) pendant des intervalles de temps (Δt₁, Δt₃, Δt₅) définis et lui transmet un signal pendant d'autres intervalles de temps (Δt₂, Δt₄, Δt₆),
**en ce qu'**un signal parasite est émis pendant un intervalle de temps assez long et est ensuite interrompu pendant un intervalle de temps plus court de telle sorte qu'un récepteur (3, 3.1) qui ne connaît pas ces intervalles de temps soit exposé à un signal parasite (6) pendant une grande partie du temps et que les courts intervalles de temps (Δt₂, Δt₄, Δt₆) sans parasites ne suffisent pas à calculer une position correcte.

5. Dispositif selon la revendication 4, **caractérisé en ce que** le parasiteur (4) peut être tiré par une installation de projection.

6. Dispositif selon la revendication 5, **caractérisé en ce que** le parasiteur (4) présente un parachute qui est ouvert quelques secondes après le tir.

7. Dispositif selon la revendication 6, **caractérisé en ce que** le parasiteur (4) est branché lors de l'ouverture du parachute et agit pendant la phase de vol (environ 1 minute).

8. Dispositif selon la revendication 6, **caractérisé en ce que** le branchement peut s'effectuer directement avec le tir ou immédiatement après le tir.

9. Dispositif selon l'une des revendications 5 à 8, **caractérisé en ce que** sa portée peut par exemple être de 5 km.
